(19) Europäisches Patentamt

European Patent Office

Office européen des brevets

(11) Veröffentlichungsnummer: **0 496 019 A1**

## (12) EUROPÄISCHE PATENTANMELDUNG

(21) Anmeldenummer: **91100858.9**

(51) Int. Cl.⁵: **B61D 47/00**

(22) Anmeldetag: **24.01.91**

(43) Veröffentlichungstag der Anmeldung:
**29.07.92 Patentblatt 92/31**

(84) Benannte Vertragsstaaten:
**AT BE CH DE FR LI NL**

(71) Anmelder: **Leitz, Ludwig, Dr.**
**Laufdorfer Weg 33**
**W-6330 Wetzlar(DE)**

(72) Erfinder: **Leitz, Ludwig, Dr.**

**Laufdorfer Weg 33**
**W-6330 Wetzlar(DE)**
Erfinder: **Frenck, Helmuth, Dr.**
**Gotenweg 33**
**W-6330 Wetzlar(DE)**

(74) Vertreter: **Riecke, Manfred et al**
**Neuköllner Strasse 8**
**W-6333 Braunfels(DE)**

(54) **Verfahren und Einrichtung zum Überwechseln von Strassenfahrzeugen auf Eisenbahn-Niederflurwagen mit Information und Vorrichtungen über die bzw. zur Absicherung der aufgestellten Fahrzeuge.**

(57) Es wird ein Verfahren und Einrichtungen zu dessen Durchführung zum Überwechseln von insbesondere 3-Achs-Sattelschlepper-Aufliegern von der Straße auf niveaugleiche Eisenbahn-Niederflurwagen beschrieben. Die Erfindung zeichnet sich dadurch aus, daß sowohl Sicherheitseinrichtungen für die richtige Aufstellung und Festlegung der Fahrzeuge auf den Niederflurwagen vorgesehen sind, als auch Sicherheitseinrichtungen, die ein seitliches Ausbrechen der Fahrzeuge während der Fahrt verhindern. Die Sicherheitseinrichtungen für die richtige Aufstellung und Blockierung der Fahrzeuge auf dem Niederflurwagen ermöglichen eine schnelle signaltechnische Information und Kontrolle über die richtige Absicherung der aufgestellten Fahrzeuge an die Organe der Bahn. Bei Anwendung von Hemmschuhen zur Blockierung der Fahrzeuge werden bei deren Anlegen und Festziehen mechanische Kontakte (0582d, 0592c) betätigt, die Teil eines digital z.B. über Funk arbeitenden Signalübertragungskreises sind, der entweder direkt oder über an den einzelnen Wagen vorgesehenen Zwischenstellen Signale über die richtig angelegten und funktionierenden Sicherheitseinrichtungen (Hemmschuhe) an die Zugführung gibt. Die das seitliche Ausbrechen der Fahrzeuge verhindernden Sicherheitseinrichtungen bestehen aus Faltwänden (043) entlang der Längsseiten der Niederflurwagen, die in zusammengefalteter Stellung das überwechseln von der Straße auf den Niederflurwagen bzw. umgekehrt ermöglichen, und die in der entfalteten Stellung das seitliche Ausbrechen sich etwa gelöst habender Fahrzeuge verhindern. Besonderer Wert wurde bei allen Einrichtungen zur Durchführung des erfundenen Verfahrens darauf gelegt, daß deren Abmessungen stets innerhalb der Norm-Umgrenzung für Gleis-Fahrzeuge bleiben.

Fig. 3 (1:20)

EP 0 496 019 A1

Die Erfindung betrifft ein Verfahren und Einrichtungen des Überganges von Kraftfahrzeugen von der Straße auf die Schiene und umgekehrt von der Schiene auf die Straße bei dem alle Kraftfahrzeuge, soweit sie für dieses Verfahren eingerichtet sind, durch seitliche Bewegung von einer niveaugleichen Rampe auf die Plattform eines niveaugleichen Niederflurwagens überwechseln können, und zwar von 40 to (44 to) Sattelschleppern über PKW mit oder ohne Wohnanhänger bis zu einem zukünftigen Stadtkurzauto.

Für diese Verfahren, wie sie z.B. schon beschrieben sind in der DE-PS 34 25 698 und der DE-PS 37 39 277, ist an eine weitgehende Selbstbedienung durch das Fahrerpersonal gedacht, um mit diesem sowieso zeitweilig verfügbaren Personal das Überwechseln an allen oder vielen Stellen des Zuges gleichzeitig voll ziehen zu können, während dem Bahnpersonal die Aufsicht, Kontrolle und Zugbegleitung vorbehalten bleibt, entsprechend eine bewährten Aufgabenteilung, wie sie bei jedem gut funktionierendem System, sei es ein Rechtsstaat mit Normenkontrolle und Rechtswesen unabhängig von der Verwaltung und Exekutive, ein Betrieb mit von der Fertigung unabhängiger Qualitätskontrolle und unabhängigem Endabnahme-Prüfwesen, oder seien es die unabhängigen technischen Überwachungsvereine gegenüber Fahrzeughaltern etc, gegeben ist.

Bei den bisher bekannten Verfahren ist es üblich, an den Seiten der Niederflurwagen Klappwände vorzusehen, wie dies in den vorstehend genannten Druckschriften beschrieben ist. Es ist dabei jedoch ein Nachteil, daß nicht sichergestellt ist, daß diese Klappwände innerhalb der lichten und genormten Fahrraumbegrenzung verbleiben. Dies kann Ursache für mancherlei Unfälle an Personen und Sachen sein.

Der Erfindung liegt die Aufgabe zugrunde, diese Quellen bzw. Ursachen für Unfälle auszuschließen und eine Abwandlung der Niederflurwagen und der Befestigungseinrichtungen anzugeben, die dazu dienen können, ein Gesamtsicherungssystem zu schaffen, das die oben geschilderten Nachteile vermeidet.

Diese Aufgabe ist durch ein Verfahren und Einrichtungen gelöst, das die in den Ansprüchen angegebenen Merkmale aufweist.

Die nachfolgend beschriebenen Einrichtungen ermöglichen es dem Aufsichtspersonal,die Sicherheit des Transportsystems zu gewährleisten. Dazu ist erfindungsgemäß eine Doppelsicherung vorgesehen. Die erste Einrichtung betrifft die Blockiereinrichtungen der aufgeladenen Fahrzeuge auf den Plattformen der Niederflurwagen. Diese Blockiereinrichtungen sind mit einem Signalsystem ausgestattet, das mittels elektrischer Schalter und elektronischer Mittel eine Rückmeldung an das Personal und/oder eine Sicherheitsschaltung gibt, daß und ob alle Befestigungen der Fahrzeuge betätigt sind und funktionieren.

Die zweite Einrichtung betrifft eine im wesentlichen mechanische Einrichtung, die als Doppelsicherung gewährleistet, daß im Falle des Versagens der ersteren Einrichtung, Fahrzeuge oder Teile davon, die sich losmachen könnten,durch seitliche Planken, die als Faltwände ausgebildet sind, auf der Plattform gehalten werden.

Um die erwähnten Gefahren für mancherlei Unfälle an Personen oder Sachen zu vermeiden, wie sie bei Klappwänden bestehen, die über die lichte und genormte Fahrraumbegrenzung hinaus- und in die gewohnten Aufenthalts- und Abstellräume der Fahrgäste oder Fahrzeugbegleiter hineinragen, werden Faltseitenwände vorgeschlagen, die innerhalb der von der Bahn vorgeschriebenen Normprofile bleiben.

Wie bereits erwähnt, ist es auch zu berücksichtigen, daß bei maschinell bedienten Einrichtungen, die über das Normprofil hinausragen, vielerlei Möglichkeiten für Unfälle entstehen können: z.B. durch apparative Störungen, aber auch durch menschliches Versagen, wie Fehlhandlungen, psychische Störungen, bewußte Sabotage-Handlungen usw. Man denke z.B. an Klappwände, die im Tunnel durch eine der genannten Störungen ausgeklappt würden.

Die Absicherung der Stirnwände ist nicht behandelt, aber hier können keine Probleme auftauchen, ob nun feste oder Klappwände vorgesehen werden.

Die nachfolgende Beschreibung geht unüblicherweise darauf ein, Maße und Normalabmessungen zu behandeln, da es sich bei dem Erfindungsgedanken darum handelt, eine maßlich realisierbare Lösung für einen akuten Notstand vorzuschlagen, der voraussichtlich noch einige Jahrzehnte dauern wird.

Darum geht die nachfolgend beschriebene Darstellung einer mechanischen Sicherung, der für den Bahntransport aufgestellten Fahrzeuge gegen seitliches Ausbrechen, an einem dafür speziell herzustellenden Niederflurwagen, aus von den Richtlinien über Begrenzung des lichten Fahrraumes sowie von der Begrenzung der Fahrzeuge etc, wie sie im "Taschenbuch der Eisenbahn, - Bahnanlagen und Fahrdienst" von Horst J.Obermayer angegeben sind. Ferner geht die Darstellung aus von den Abmessungen von Bahn-Niederflurwagen, wie sie für die österreichische Bundesbahn hergestellt wurden, um auch 40-44 to (+10%) LKW-Sattelzüge und auch Gespanne ohne Beschränkung der Höhe für Tunneldurchfahrten aufnehmen zu können. Dieser Niederflurwagen mit einer besonders niedrigen Höhe der Ladefläche über der Schienenoberkante wurde auf der Hannover Messe 1989 ausgestellt. Die zugehörigen "Monoblockräder" mit einem Laufkreisdurchmesser von 360 mm wurden 1990 in München auf der Ausstellung "Eurotransport" gezeigt.

Da die Art des seitlichen Überwechselns auf gleichem Niveau von der Rampe zur Plattform des

2

Niederflurwagens z.B. in den DE-PS 37 39 277 und DE-PS 34 25 698 bereits beschrieben ist, wird nachfolgend im wesentlichen nur auf die erfindungsgemäßen Abwandlungen der Niederflurwagen und der Befestigungseinrichtungen eingegangen, soweit sie dazu dienen können, die mit einem Gesamtsicherungssystem in Zusammenhang stehenden beiden erfundenen Sicherungen zu erläutern.

Bei dem vorzugsweise anzuwendenden System des Überwechselns, das ohne mitgeführte Querrolleinrichtung arbeitet, und das somit den geringsten Bedarf an Zusatzgewicht und Kostenaufwand hat, entsprechend der EP-Anmeldung Nr. 90119194.0, drückt die Zugmaschine den Sattelauflieger mittels Schräganfahrt zuerst nach einem auf dem Niederflurwagen markierten Ort hin, wobei unter anderem empfohlen wird, dieses Ansteuern mittels Fernsehgerät, Katzenaugen und Spotlichtern (oder Lichtzeigern) zu unterstützen.

Es besteht allerdings auch die Möglichkeit, dieses Ansteuern noch einfacher über die üblichen Seitenspiegel vorzunehmen, wenn auf dem Gitterrost der Aufstellfläche konzentrisch zur Mitte, um die nachfolgend der Auflieger mittels einer auf dem Boden verbleibenden Achse und zusätzlicher Stützvorrichtung geschwenkt werden soll, Markierungen aus reflektierendem Material in Kreisbogenform angebracht werden. Diese Kreisbogen-Marken sind knapp peripher um den Aufstellkreis der Schwenkachse anzubringen. Korrespondierend zu diesen Markierungen dienen dann je 2 oder 3 an den Seiten des Aufliegers befestigte Lichtzeiger, die mit den Markierungen auf der Aufstellfläche in Deckung zu bringen sind, dazu, die richtige Stellung anzuzeigen.

In den Zeichnungen ist die Erfindung in mehreren Ausführungsbeispielen dargestellt.

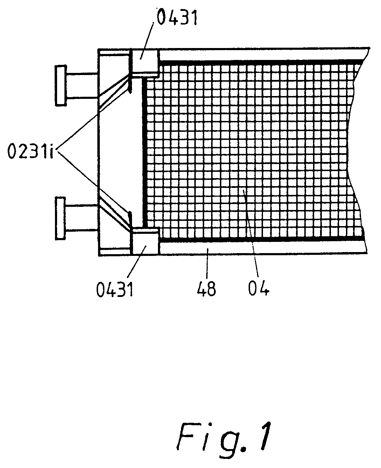

Fig. 1      zeigt in Draufsicht einen Niederflurwagen als Ausschnitt eines Wagenendes mit einem Gitterrost in der Art, wie er bereits in der älteren Europäischen Anmeldung Nr. 90119194.0 beschrieben ist,

Fig. 2    zeigt etwa im Maßstab 1:20 einen Querschnitt des vorgeschlagenen Niederflurwagens mit einem Querschnitt auch der vorgeschlagenen Faltwand in der aufgefalteten und der zusammengefalteten Stellung,

Fig. 3    zeigt etwa im Maßstab 1:20 den Niederflurwagen mit aufgefalteter Faltwand im Aufriß als Ausschnitt einer Seitenansicht,

Fig. 4    zeigt etwa im Maßstab 1:10 die Anordnung einer Elliptik-Feder, die mit Rücksicht auf den beschränkten Raum, der nach oben nur bis zur Aufstellfläche reicht, nach unten geschwungen ist,

Fig. 5    zeigt etwa im Maßstab 1:10 die Stelle, an der die Elliptik-Feder mit der Längstraverse und der Aufstellfläche verbunden ist, im Schnitt AB. Gleichzeitig wird mit diesem Schnitt die Statik der Längstraverse und der mit ihr fest verbundenen Aufstellfläche in Rasterform erläutert.

Fig. 6    zeigt einen Hemmschuh mit elektrischem Kontakt zur Einschaltung einer elektronischen Rückmeldung zwecks Bestätigung der Befestigung des Hemmschuhes auf dem Gitterrost und der Anlage an dem Reifen, in einer ersten Ausführungsform,

Fig. 7

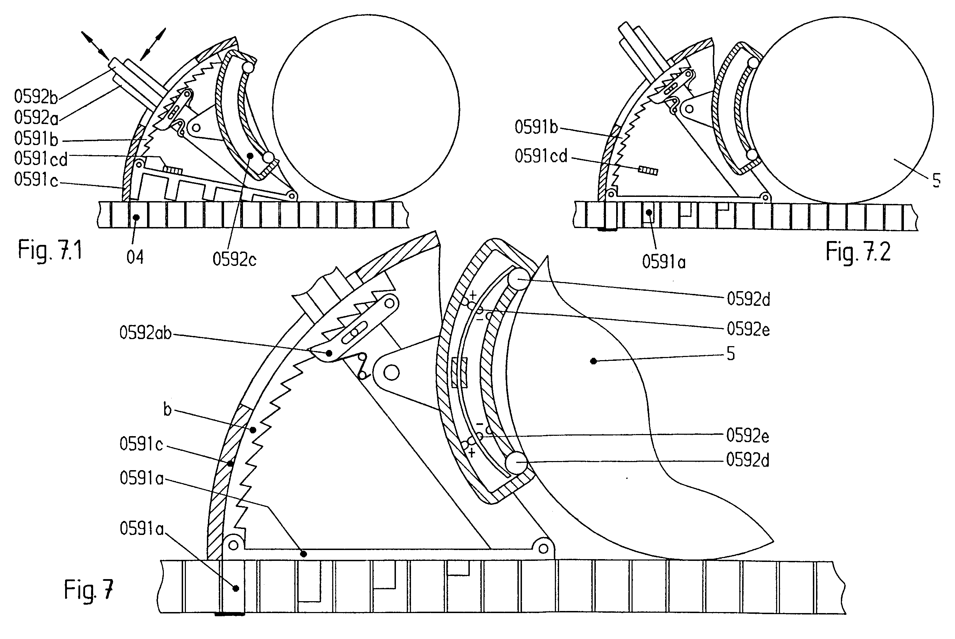

Fig. 7.1    zeigen einen Hemmschuh mit elektrischen Kontakten,
Fig. 7.2    der sowohl für die Befestigung auf dem Gitterrost des Bahnniederflurwagens als auch auf einer abschüssigen Straße eingesetzt werden kann.
Fig.7.1 zeigt die Stellung, in welcher der Hemmschuh für den Transport und den Einsatz auf der Straße zusammengeschoben ist,
Fig.7.2 zeigt die Stellung im Einsatz beim Bahntransport auf dem Raster des Niederflurwagens, was auch in Fig.7.in größerem Maßstab ca. 1:10 mit mehr Einzelheiten dargestellt ist, insbesondere die Einwirkung des mechanischen Andrucks auf die elektrische Schaltung.

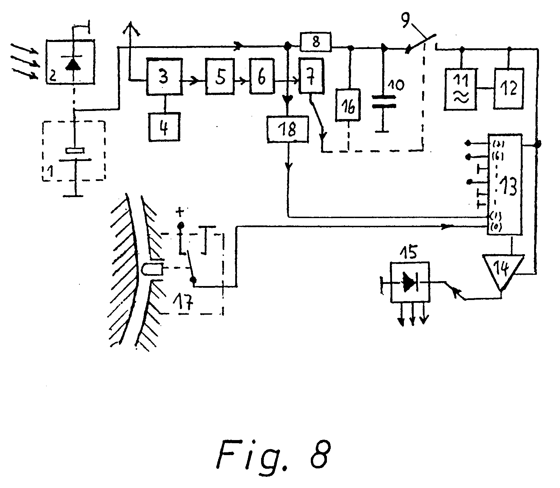

Fig. 8    zeigt einen Schaltplan der kombinierten elektrischen und elektronischen Rückmelde-Einrichtung.


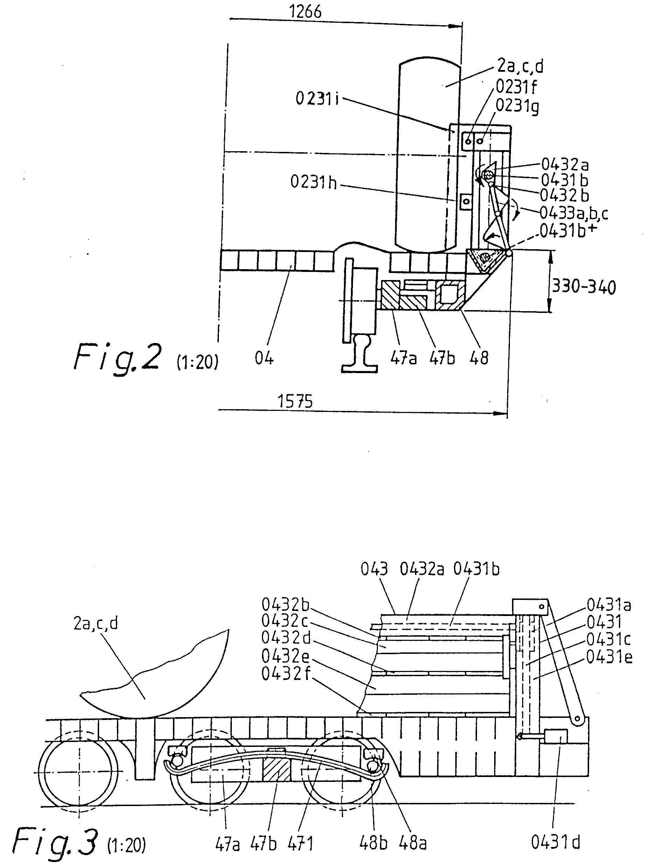

In Fig.2 ist auf dem Schienenprofil ein Rad mit einem geringen Durchmesser gezeigt, desgleichen eine

4

niedrige Aufstellfläche für die Reifen, die mit 2a, 2c, 2d angedeutet sind. Die hierfür gezeigten Maße entsprechen den entsprechenden Maßen des bereits erwähnten Niederflurwagens, der für die österreichische Bundesbahn speziell für Tunneldurchfahrten entwickelt wurde sowie den zugehörigen Monoblock-Rädern mit einen Laufkreisdurchmesser von 360 mm.

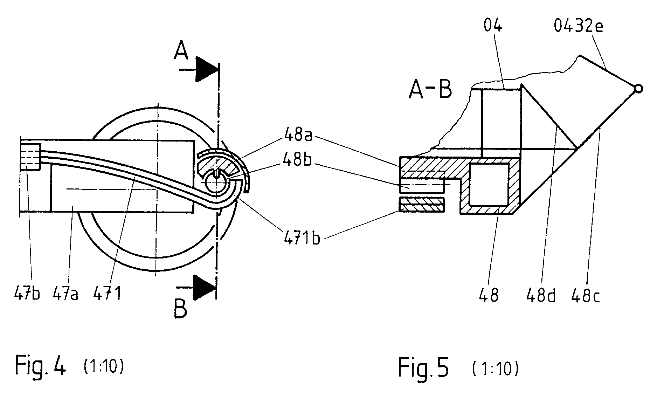

Im Gegensatz zu dem erwähnten Niederflurwagen, der eine bis zu 1070 mm von der Schienenoberkante aufragende Seitenwand besitzt, kann, um den Erfindungsgedanken zu verwirklichen, die Profilhöhe des Längsträgers nur um die Höhe einer geringen Schwelle bis auf eine Höhe von ca. 34-35 cm hin überschritten werden. Um aber trotzdem eine genügende Stabilität zu erreichen, ist der Längsträger 48 mit dem Gitterrost 04 und den Seitenplanken 48c und 48d, die eine Aufnahme-Rinne für die Faltwandglieder 0432a - 0432f bilden, fest verbunden. Für den Gitterrost kann andererseits auf der ganzen Bodenfläche, mit Ausnahme der Stellen, die vom Fahrgestell 42 und den Schienenlaufrädern eingenommen werden, die volle Höhe innerhalb der für die Bundesbahn genormten Fahrzeugbegrenzung genutzt werden. Dies ist aus Fig.3 ersichtlich. Die Bleche des Gitterrostes 04, die von Seitenkante zu Seitenkante verlaufen, sind zwar durch Schlitze unterbrochen, um den Platten an den Enden der Zapfen 05821a Halt zu bieten. Diese Schlitze brauchen nicht die volle Breite einzunehmen. Auch findet das Raster wieder durch die längs verlaufenden Bleche in sich ein günstiges Gesamt-Widerstandsmoment, verbunden mit dem steifen Rahmen rings um den Rand des Niederflurwagens.

Die Elliptik-Federn 471 (Fig.3, 4 und 5) - pro Niederflurwagen sind acht Stück vorgesehen - liegen bei 476 auf dem Fahrgestell auf. Nach den Enden zu sind sie zunächst nach unten gebogen, dann aber nach oben gekröpft und anstelle der Schwingen beim Thyssen-Vorbild sind zwecks Raumeinsparung Walzen 486 vorgeschlagen. Diese Walzen können bei einer geführten Abwärtsbewegung zu einem seitlichen Ansatz der Längsträger 48a, so wie es in Fig.4 angedeutet ist, und einem gekurvten Profil (nicht gezeichnet), die Kennlinie der Federn leicht beeinflussen, so daß ein der Schwingen-Bewegung analoger Effekt auftreten kann. Mit 48c ist eine Kapsel angedeutet, die das Gelenk umfaßt und sichert.

Die Falt-Seitenwände bestehen aus drei ineinander schatelbaren Planken 0432a, 0432c und 0432e und den sie untereinander und der Plattform verbindenden Scharnieren 0432b, 0432d, 0432f. Die oberste Planke 0432a besteht aus einem geschlossenen Dreieckprofil,innerhalb dessen eine Zugstange 0431b verläuft. Diese Zugstange ist unter Spannung an beiden Enden mit Muttern 0431a verbunden, die in den vier Eckpfosten 0431 in geschlitzten Vierkant-Hülsen 043e geführt sind und von Synchronmotoren 0431d mittels Spindeln 0431c angetrieben werden. Die Zugstange 0431b dient gewissermaßen als Achse für die obere Planke 0432a. Das Absenken der Faltwände geschieht dann mittels der spindelantriebe und Muttern 0431a über die Zugstangen 0431b, deren untere Stellung mit 0431b$^{+}$ markiert ist (Fig.2). Um das Einfalten der Planken nach den richtigen Seiten beim Abwärtsbewegen der Zugstange 0431b zu bewirken, sind an den Plankenenden Knickstreben 0433a, 0433b, 0433c vorgesehen, die nur nach den vorgesehenen Seiten einknicken können.

In der unteren Endlage liegen dann die Planken zusammengeschachtelt in der Rinne 48c, 48d mit einem ebenen oberen Abschluß durch Planke 0432a mittels deren geschlossener Außenhaut.

Die Eckpfosten 0431 sind mit Streben versehen, um genügend Zugspannung aufnehmen zu können. Die beiden unteren Planken 0432c und 0432e haben zwar keine geschlossene Außenhaut, die Abwinklung gibt ihnen aber ein größeres Widerstandsmoment, und die untere Planke ist durch das Scharnier 0432f versteift, während Planke 0432c über Scharnier 0432b an 0432a und 0431b Versteifung erfährt.

Die Eckpfosten, insbesondere deren Kopf, können mehrere weitere Funktionen übernehmen: 1. als Relaisstation für elektronische Signale dienen, 2. für einen Scheinwerfer 0431f als Lichtstromlieferant zum Aufladen von Akkus vermittels Solarzellen bei Nachtfahren. 3. Lichtschranken 0431g, die beim Scheinwerfer unter Punkt 2 ein Flackerlicht auslösen und gleichzeitig die Stromzufuhr für Motor 0431d blockieren und auch eine Meldung an die Kontrollstelle geben, wenn ein Fahrzeug falsch aufgestellt ist und noch in den Bewegungsraum einer Faltwand hineinragt. 4. Nutzung als Stromzapfsäule z.B. für Kühlanlagen für Lebensmitteltransporte.

Vor der Behandlung des hauptsächlich elektronischen Teils der Anmeldung ist die Beschreibung der Blockiermittel für die Fahrzeuge gesetzt und der mit diesen Blockiermitteln verbundenen Kontakte, die den Befestigungszustand auf Anfrage oder selbsttätig weitermelden können.

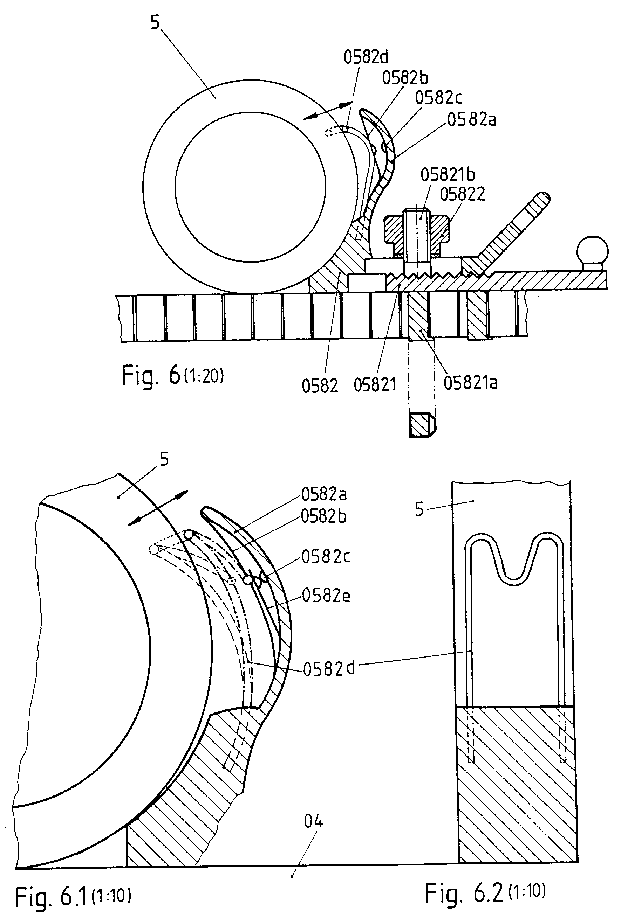

Die einfachste Hemmschuh-Ausführung besteht aus einem zweiteiligen Gerät, ähnlich dem bereits in früheren Anmeldungen beschriebenen: einem unteren Teil 05821, das über Zapfen 05821a, und Platten an deren Enden, sich einhakend mit dem Gitterrost o4 verbindet Das zweite Teil 0582, das man sich aus einem mit Einlagen verstärkten Kunststoff vorstellen kann ist nach Lösen der Mutter 05822 mittels eines Handgriffes an einen Reifen 5 anschiebbar, wobei ein im Gehäuse gelagerter, federnder, gekröpfter Drahtbügel 0582d zurückgebogen wird. Dabei setzt er die beiden Teile 0582 und 05821 unter Spannung, so daß sie nach Anziehen der Mutter 05822 auf der Plattform fest verkeilt sind. Mit dem Zurückbiegen des Drahtbügels (Fig.6.1; 6.2) drückt ein abgekröpftes Stück des Drahtes auf die Mitte einer elastischen Membran 0582b, welche das schalenförmige Gehäuse 0582a nach innen abschließt. Hinter der Membrane befindet sich eine Kontaktlamelle 0582e, die durch den Druck des Drahtbügels 0582d mit 0582c den Kontaktschluß herbeiführt. Teil 05821 ist in Metall ausgeführt. Das in einem nachfolgenden Abschnitt beschriebene elektronische Aggregat mit Akku, Solarzelle, Kleinantenne, ist als geschlossene Einheit mit Steckverbindungen versehen, die über die Verzahnung von 05821 die Erdung zum Gitterrost 04 hin bewirkt. Diese kleine elektronische Einheit wird in das Gehäuse von 0582 gesteckt.

Während bei dem in Fig.6 beschriebenen Hemmschuh nur ein einfacher Kontakt gezeigt wird, wird bei dem Hemmschuh in Fig.7 ein Umschalter gezeigt, der an zwei Stellen 0592c durch die Andruckbewegung gegen den Reifen 5 von Minus auf Plus geschaltet wird. Dies erlaubt zwei verschiedene Signale zu geben: Auf der Minus-Stellung wäre das Signal zu geben: Blockiergerät vorhanden aber noch nicht richtig eingesetzt. In der Plus-Stellung das Signal: Gerät richtig eingesetzt. Selbstverständlich können beide Kontaktvarianten bei beiden Hemmschuh-Ausführungen angewandt werden. Dies hängt auch mit der Frage zusammen, ob die Signale selbsttätig oder auf Abruf abgegeben werden. Auch beides ist möglich: der Abruf vor dem Start des Zuges und die Intervallmeldung während der Fahrt. Fig.7.1 und Fig.7.2 zeigen im wesentlichen die Mechanik des zusammenschiebbaren Hemmschuhs. In Fig.7.1, der kompakten Stellung für den Transport und den Einsatz als Hemmschuh auf der Straße, sind Teil 0591c, das mit seinem Zapfen 0591a zum Eingriff in den Gitterrost 04 bei der Bahnfahrt dient, und die beweglichen Teile: Anstellbügel 0592c, Anstellhebel 0592a, deren Funktion das Verkeilen der Reifen bei der Bahnfahrt ist, in das Gehäuse 0591c eingeschwenkt.

Mit 0591cd ist ein Anschlag im Gehäuse 0591c für das Teil 0591a bezeichnet. Teil 0591a ist auf der gleichen Schwenkachse im Gehäuse 0591c gelagert wie der Anstellhebel 0592a, mit dessen aus dem Gehäuse ragendem Stellgriff, in dem sich mittig ein Stößel 0592b befindet, durch den eine Sperrklinke 0592ab gelöst werden kann. Das Zahnsegment 0591b, auf das die Sperrklinke 0592a wirkt, ist über eine Achse fest mit dem Zapfenteil 0591a verbunden.

Die Festlegung der Räder bzw. Reifen 5 auf dem Gitterrost geschieht folgendermaßen: Mit Hilfe des Anstellhebels 0592a über Sperrklinke 0592ab und Zahnsegment 0591b wird das Teil 0591a aus dem Gehäuse 0591c geschwenkt. Das festzulegende Rad mit seiner Achse sei bereits festgebremst. Dann werden zunächst die vorderen Zapfen von 0591a - dies können zwei oder drei oder auch mehrere nebeneinander sein - in die nächstpassende Lochreihe des Rasters eingehängt und mittels der Abschlußplatte im Gitter verhakt Die Passung der großen und kleinen Zapfen ist zunächst locker. Mit dem Anziehen des Anstellhebels entgegen dem Reifen 5 legt sich der bügelförmige Teil 0592c unter Spannung an den Reifen an, entsprechend den Fig.7 und 7.2. Die Einzelheiten, wie die mechanische Drucküberleitung auf die elektrischen Kontakte erfolgen soll, zeigt Fig.7. Zur elastischen Druckübertragung bei gleichzeitigem Schutz des Kontaktgehäuses gegen Witterungseinflüsse sind Luft-Gummibälle 0592d vorgesehen, die von der Rückseite her unter dem Druck der Kontaktfeder 0592a stehen. Da symmetrisch auf der Fahrzeuggegenseite ein gleicher Hemmschuh einzusetzen ist, ist dann das Fahrzeug mindestens an vier Punkten gegen Abheben von der Plattform gesichert. Zum späteren Wiederlösen der Spannung beim Abfahren ist dann nur der Spannhebel 0592a über den Stößel 0592b und die Sperrklinke 0592ab zu lockern und zurückzuschwenken auf die Stellung der Fig.7.1.

In der EP-Anmeldung Nr. 90119194.0 ist noch eine andere Befestigung und Sicherung eines Sattelschlepper-Aufliegers auf dem Gitterrost beschrieben. In diesem Falle ist als Schnellbefestigung ein Bajonett vorgeschlagen, das bei dem schon erwähnten Schwenkvorgang automatisch zum Verriegeln auf der Waggon-Plattform führt. Der weibliche Teil ist hierbei in das Gitterraster 04 eingelassen, während der männliche Teil in allen Raumrichtungen hart federnd mit der Schwenk- und Stützvorrichtung verbunden ist. Selbstverständlich läßt sich auch für diese Vorrichtung eine elektrisch/elektronische Rückmeldung in ähnlicher Weise über die erfolgte Sicherung ausführen.

Hierzu braucht nur im männlichen Teil des Bajonetts ein Stift oder Schwenkhebel eingebaut zu sein, der von einer Fläche des weiblichen Teils in der Riegelstellung bewegt wird und die elektrischen Kontakte betätigt. Die Erdung geschieht zwangsläufig mit dem Bajonettieren, da der Gitterrost über Fahrgestell und Räder mit den Gleisen verbunden ist. Gleiches gilt auch für die in der EP-Anmeldung Nr. 90105062.5 in Zusammenhang mit den Fig. 18, 18.1 und 18.2 beschriebenen verstärkten vorderen Stützen des Sattelschlepper-Aufliegers und den beiden mit ihnen verbundenen auf den Seiten 17 und 18 und den Fig. 16-17.8 beschriebenen Blockiereinrichtungen. Hierbei ist es für den Fachmann kein Problem, Kontakte und eine elektrisch/elektronische Rückmeldeeinrichtung, entsprechend der nachfolgend beschriebenen Schaltung anzubringen, z.B. durch einen federnd anliegenden Stift oder Hebel, der in das Teleskopteil 0383e in der Blockierstellung in eine Vertiefung einfällt und damit den Kontakt betätigt und die Meldung "Befestigung ausgeführt" weitergibt.

Bei der elektrisch/elektronischen Rückmeldeeinrichtung geht es in erster Linie darum, eine schnelle und sichere Rückmeldung an die Zugleitung sicherzustellen, ob alle Fahrzeuge auf dem Niederflurwagen richtig aufgestellt und blockiert sind und ferner eine Rückmeldung und auch Schaltsignale für die Faltwände durchzugeben. Als weitere Zusatzsicherung für den unwahrscheinlichen Fall, daß sich ein Fahrzeug löst, ist eine ständige Kommunikation nötig. Dieses Gesamt-Kommunikationssystem kann aber nur dann seinen Zweck erfüllen, wenn es aus einfachsten Elementen besteht und funktionssicher ist.

Wegen der großen Anzahl und der jeweils neuen Anordnung der Fahrzeuge ist die Überwachung der kritischen Punkte ein besonderes Problem. Die Notwendigkeit, jeden Fahler an eine spezielle Stelle zu übertragen, z.B. an den Zugführer, verlangt elektronische, zumindest elektrische Hilfsmittel bei allen Fehlersensoren, seien diese mechanischer, optischer oder akustischer Art. Dabei würden Vorsorgungs- und Signalleitungen zu den vielen Fehlersensoren ein nicht akzeptables Leitungsgewirr erfordern, das wiederum die Sicherheit des Personals gefährden könnte.

Es besteht daher die Forderung, daß alle sicherheitsrelevaten Teile, d.h. vornehmlich die Hemmschuhe 0582 bzw. 0591, 0592, integriert je ein gleichartiges Sicherheitselement (SE) und Signalgeber enthalten, das ohne äußere Drahtverbindung arbeitet. Dies erfordert eine Versorgung für ausreichende Zeit durch kleine, leicht auswechselbare bzw. leicht nachladbare Batterien oder Solarzellen mit Akkumulatoren und eine drahtlose Signalübertragung auf optischem, akustischem Wege oder durch Funk, wobei nur ein geringes Maß an Stromverbrauch zulässig ist.

Dem widerspricht zunächst die Forderung einer Mindestleistung für ein jederzeit sicher zu empfangendes Signal. Dies ist zu lösen durch kurze Signale und lange Ruhezeiten dazwischen. Für die dauernd eingeschalteten Kreise, Zeitgeber oder Bereitschaftsempfänger sind heute Bauteile mit extrem kleiner Stromaufnahme verfügbar.

Das Signalmedium ist durch die geforderte Reichtweite und die Störmöglichkeit bestimmt. Für kleine Abstände, etwa innerhalb eines Wagens, bieten die Fernbedienungen der Unterhaltungselektronik eine Vielzahl preiswerter Möglichkeiten der Infrarot- oder Ultraschall-Übertragung.

Ihre Meldungen müssen pro Wagen von einer Zwischenstelle (25) aufgefangen, zusammengefaßt und an die Zentralstelle weitergegeben werden. Beim Beladen müssen die Sendeelemente des Sicherheitselements (SE) grob auf den Empfänger der Zwischenstelle ausgerichtet werden. Bei Funkübertragung dürfte zwar die Reichweite ausreichen, um ohne Zwischenstelle direkt an die Zentrale zu melden.

Eine Zwischenstelle auf jedem Niederflurwagen zur Meldung z.B. an die Zugführung einzuführen, hat aber mehrere Vorteile. Es ist gedacht, eine solche, wie bereits behandelt, in einem der Eckpfosten 0431 anzubringen. 1. steht hier Bordstrom zur Verfügung und dementsprechend kann die Sendeenergie höher sein. 2. können hier auch Befehle von der Zentrale angenommen werden, z.B. zur Aufwärtsbewegung oder Abwärtsbewegung der Faltwände. 3. kann die Zwischenstelle als Zwischenabrufstelle benutzt werden. 4. ist es bei einer Fehlermeldung, sei es ein Fehler an einer Blockiereinrichtung oder an einer Faltwand, oder daß eine Lichtschranke einen Aufstellfehler meldet, wichtig zu wissen, an welchem Niederflurwagen der Fehler aufgetreten ist.

Da die Zwischenstellen ortsfest sind, wie gesagt z.B. in einem Eckpfosten des Niederflurwagens, können sie mit höheren Leistungen arbeiten, d.h. mit höherem Stromverbrauch und ggf. auch mit Signalleitungen zur Zentrale. Wenn jedoch nicht ohnehin Leitungsverbindungen zwischen den einzelnen Zwischenstellen-Bereichen bestehen, wird eine Funkverbindung zur Zentrale am einfachsten sein.

Bei Auftreten eines Fehlers muß die Zentralstelle erkennen, welches der Vielzahl von Sicherheitselementen einen Fehler meldet. Wobei vom Sicherheitselement bereits auch das Nachlassen einer Batterie bzw. der Stromzufuhr gemeldet werden muß.

Eine elektrisch/elektronische Schaltung, die diesen Erfordernissen genügt, übersteigt den Rahmen der vorliegenden Anmeldung. Es sei darauf hingewiesen, daß bei 10 bis 30 Sicherheitselementen innerhalb einer Zwischenstelle nur eine digitale Durchgabe in Frage kommt.

Die Impulse kann man direkt als Signalimpulse aussenden. Dann ist jedoch der Einfluß von Störpegel etc. sehr hoch. Sicherer ist es, eine für die Übertragung besonders günstige Trägerfrequenz und am Empfänger einen selektiven Kreis zu verwenden, wobei auf einen Impuls genügend viele Trägerwellen fallen müssen.

Damit sofort erkannt werden kann, ob an einer Sicherheitsstelle sich die Sicherung gelöst hat, müssen die Sicherheitselemente ständig abgefragt werden. Bei digitaler Durchgabe der Meldung in Form eines Meldewortes von beispielsweise 8 Impulsen Umfang und Verwendung einer Trägerfrequenz von 100 kHz dauert 1 Impuls eine Millisekunde, wenn man jedem Impuls 100 Wellen zuordnet. Je nach Impulsabstand erfordert das ganze Meldewort dann 8-16 Millisekunden. Bei der Abgabe einer Meldung alle 8-16 Sekunden liegt somit zwischen den einzelnen Meldungen eine 1000fache Ruhezeit.

Bei Funk kann man mit einem Träger bis zur 1000fachen Frequenz (UKW) rechnen. Entsprechend kleiner wird der Zeitbedarf der Meldung. Allerdings müßte auch ein Direktempfänger (ohne Zwischenstellen) eine höhere Zahl von Meldungen mit 12 bit empfangen.

Die Schaltung und Funktion eines Sicherheitselementes, wie sie in großer Zahl angewandt werden sollen, sind im Zusammenhang mit Fig.8 erläutert, wobei eine digitale Durchgabe der Meldung vorausgesetzt ist.

Die Sicherheitselemente sind alle gleich, bis auf den Fehlersensor, der von den Kontakten 0582c; 0582e (Fig.6.1) oder auch von den Kontakten bei 0592e (Fig.7) gebildet wird. Dies sind in aller Regel einfache Kontakte, die lediglich die Berührung zweier Körper melden und damit ein EIN oder AUS auf ein Fehlerbit übertragen.

Die Stromquelle 1 (Fig.8) kann ein Akku sein, der laufend von Solarzellen 2 (Fig.8) nachgeladen wird. Für Abrufempfänger kann man bei genügender Feldstärke mit einem Drähtchen als Antenne und einem einzigen Radio-IC 3 mit Resonanzkreis 4 auskommen.

Für die Impulserkennung werden ca. zwei Logikbausteine 5 und 6 benötigt, außerdem ein Verzögerungszähler 7. Bei autonomer Impulsgabe ist für die Bausteine 3-7 ein Oszillator mit Zähler oder ein fertiger Uhrenbaustein einzusetzen.

Der Signalgeber enthält den Trägerfrequenz-Oszillator 11, den Impulsdauer-Zähler 12, das Shiftregister 13 mit acht bzw. zwölf Stufen, den Leistungsverstärker 14 für die Antenne bzw. einen Ultraschallgeber oder eine Leuchtdiode 15. Letztere sind außen angebracht und auf den Empfänger der Zwischenstelle ausrichtbar.

Solange der Schalter 9 offen ist, wird der Kondensator 10 über den Baustein 8 aufgeladen. Dieser Baustein 8 kann zum Vermeiden von Widerstandsverlusten ein Chopper-Stromregler sein.

Die Bausteine 3-7 und 18 sind mit besonders kleinem Stromverbrauch ausgesucht. Als Bereitschaftsempfänger gibt der Baustein 3 den Rufimpuls, d.i. die Frequenz von 4 mit der ggf. in 5 und 6 gefilterten Kennung, an das Verzögerungsglied 7 weiter, das den Schalter 9 einschaltet. Die Bausteine 3-7 könnten aber auch als Uhrenbaustein dasselbe bewirken.

Der Vergleicher 16 anstelle von 3-7 schaltet den Schalter 9, wenn der Kondensator 10 vollgeladen ist. Nun schwingt der Oszillator 11 in der Trägerfrequenz. Der Zähler 12 zählt die Anzahl der Perioden für einen Impuls ab. Die Impulsfrequenz ist auf den Eingang des Shiftregisters 13 geschaltet. Dieses gibt nur die Impulse an den Leistungsverstärker 14 weiter, deren bit-Nr. an den Paralleleingängen 0 bis 7 auf + geschaltet ist. Dies ist fest für bit 2 bis 7 geschehen, und zwar für jedes Sicherheitselement mit einer anderen Binärzahl. Bit 0 und 1 werden nur dann +, wenn der Fehlersensor 17 (Fig.8), d.h. die Kontakte 0582c, 0582e (Fig.6; 6.1) oder 0592e (Fig.7) oder der Batteriewächter (Fig.8) einen Fehler melden. In der Verstärkerstufe 14 werden die durchgelassenen Impulse noch mit der Trägerfrequenz gemischt und auf das Geberelement geführt. In der Zeichnung ist angedeutet, wie ein öffnen der Kontakte 0582c; 0582e; oder 0592e zum Umschalten des Kontaktes 17 von 'Minus' auf 'Plus' führt, wenn sich z.B. der Hemmschuh eines Rades vom Rad löst.

Nach erfolgter Fehlerbeseitigung ist eine Rücksetzung des Schalters 9 erforderlich, die in an sich bekannter Weise z.B. durch eine Hebelumlegung geschehen kann und nicht weiter erläutert ist.

Abschließend seien noch zwei mit dem Vorstehenden in Zusammenhang stehende Problemkreise angesprochen, nämlich: erstens die Zufuhr von elektrischer Energie mittels Scheinwerfer über Solarzellen, und zweitens das Erfordernis, die Primär-Informationsausstrahlung über den Befestigungszustand der Fahrzeuge auf den einzelnen Niederflurwagen auf eben diesen Niederflurwagen bzw. dessen Relais- oder Zwischenstelle zu beschränken, und nicht etwa auf einen der benachbarten Niederflurwagen zu übertragen.

Die Stromzufuhr mittels Scheinwerfer und Solarzellen geschieht, um die Energieversorgung in jedem Falle sicherzustellen, was auf diese Weise ohne weiteres möglich ist, da ja erfahrungsgemäß heute auch schon Taschenrechner weitestgehend mit Solarzellen versehen sind.

Für die Lichtzufuhr zu den Solarzellen sind als Quelle die Scheinwerfer 0231h in Fig.2 bestimmt. Sie sollen das Licht in der Nacht und in Tunnels liefern. Die Solarzellen sind gedacht, an den Kunststoffgehäusen der Hemmschuhe 0582a in Fig.6.1 beidseitig seitlich angebracht zu werden, um das Licht über die schmalen Licht-Kanäle zwischen Reifen und Faltwänden zu empfangen. Die beidseitige Anbringung soll geschehen, um die gleichen Hemmschuhe sowohl linksseitig wie rechtsseitig einsetzen zu können. Der Lichtkanal hat seinen größten Querschnitt in der Höhe der Faltwandplanke 0432c. Darum ist der Scheinwerfer in dieser Höhe angebracht, und es ist gedacht, die Strahlen streifend auf diese Planke zu richten, die mit einem Anstrich zu versehen ist, der einen seitlichen Glanzwinkel bewirkt, etwa im Bereich von 90° ± 20°, wie er z.B. mittels Kugel-Perlen zu erreichen ist (entsprechend dem Regenbogeneffekt bei Wassertropfen). Dieser Lichtkanal kann auch in der umgekehrten Richtung zur Informationsübertragung von der Blockiervorrichtung zu den Zwischenstellen an den Niederflurwagen-Eckpfosten 043 eingesetzt werden, sowohl für Infrarot-Lichtsendungen wie auch für Kurzwellensendungen, wenn der Anstrich an der Oberfläche metallisch ist, z.B. aus Aluminium-Pulver besteht.

Die Beschränkung der Informationsausstrahlung auf die einzelnen Relais- bzw. Zwischenstationn soll geschehen, um erstens bei der Primärausstrahlung mit geringer Energie und Reichweite auszukommen, und zweitens eine höhere Narrensicherheit zu erzielen, für den Fall des Aufstellens in einem nicht gebuchten Waggon. Zur Beschränkung ist je ein Abschirmblech 0231i (Fig.2) an den Eckpfosten vorgesehen, das den elektromagnetischen Kanal nach außen begrenzt. Die entsprechenden Empfänger (Photozellen oder Antennen) sind dementsprechend innerhalb dieses Kanalraumes anzubringen; die Sender der Zwischenstellen müssen dagegen außerhalb angebracht werden.

**Patentansprüche**

1. Verfahren und Einrichtung zum seitlichen Hin- und Zurück-Überwechseln von Straßenfahrzeugen bis einschließlich 3-Achs-Sattelschlepper-Aufliegern von einer Rampe auf niveaugleiche Eisenbahn-Niederflurwagen mit weitgehend universell nutzbarer Aufstellfläche,
gekennzeichnet durch verschiedene mechanische und fernmeldetechnische Maßnahmen und zugehörige Einrichtungen, die bei weitgehendst möglicher Selbstbedienung durch die Fahrzeugfahrer beim Aufstellen und Blockieren der Fahrzeuge eine schnelle Information und Kontrolle seitens der Bahn über die Absicherung der aufgestellten Fahrzeuge innerhalb der Sicherheitsbelange und Normabmessungen der Bahn bewirken.

2. Verfahren und Einrichtung nach Anspruch 1, dadurch gekennzeichnet, daß außer der Meldung der Anwesenheit von Fahrzeugen samt Kennzeichen und deren fahrzeugfesten oder separaten Blockiervorrichtungen (0582 in Fig.6; Fig.6.1; Fig.6.2 und 0591 in Fig.7; Fig.7.1; Fig.7.2) auch deren vollzogene und räumlich korrekte Festlegung an den Strukturen (04) der Niederflurwagen-Plattformen signaltechnisch erfolgt, sowohl mit Signalen für die Aufsteller selbst als insbesondere für die technischen und/oder personellen Organe der Bahn.

3. Einrichtung nach den Ansprüchen 1 und 2, dadurch gekennzeichnet, daß bei Anwendung von Hemmschuhen zur Blockierung der Fahrzeuge außer dem unter Spannung stehenden mechanischen Kontakt (0582d mit 0582b und 0592c mit 0592e) der Hemmschuhe mit den Reifen (5) der Fahrzeuge und der damit verbundenen elektrischen Kontaktierung (0582c; 0582e; 0592) auch die sichere Verbindung mit der Aufstellplattform (Gitterrost 04) mittels Erdung rückgemeldet wird.

4. Einrichtung nach Anspruch 1, dadurch gekennzeichnet, daß als weitere Sicherung gegen ein Ausbrechen der Fahrzeuge, insbesondere nach den Seiten, Faltwände (043 in Fig.3) vorgesehen sind, die in zusammengefalteter Stellung das seitliche Überwechseln ermöglichen und in der entfalteten Stellung das Ausbrechen verhindern, wobei sie in jeder Stellung innerhalb der Norm-Umgrenzung für Gleisfahrzeuge bleiben.

5. Einrichtung nach Anspruch 4, dadurch gekennzeichnet, daß die Stellungen der Faltwände von der Zugführung gesteuert werden, wobei eine gekoppelte Rückmeldung über die Stellung der Wände, und auch über den Freiraum, mit Hilfe einer Lichtschleuse (0231g in Fig.2) vor Steuerung auf die nächste Stellung, vorgesehen ist.

6. Verfahren und Einrichtung nach den Ansprüchen 1, 2, 4 und 5, dadurch gekennzeichnet, daß die Informationen über den Zustand der Sicherheitseinrichtungen und den Zustand der aufgestellten Fahrzeuge an die Zugführung über Relais-Stationen (= Zwischenstellen ZS) getrennt für jeden Niederflurwagen erfolgen, und daß Mittel vorgesehen sind, um die Informationen bzw. die Informationswege durch Abschirmung Wagen für Wagen getrennt zu halten, um die Primärmeldung nur innerhalb eines Niederflurwagens bis zur eigenen Relaisstation (Zwischenstelle ZS) ausstrahlen zu lassen oder z.B. durch Ausstrahlung und Empfang von Wagen zu Nachbarwagen verschiedenen elektromagnetischen Frequenzen bei gleichzeitig geringen Reichweiten, oder auch mit beiden Mitteln gemeinsam (= Abschirmung plus Frequenzverschiedenheit) zwischen benachbarten Wagen.

7. Verfahren und Einrichtung nach den Ansprüchen 1, 2, 4 und 5, dadurch gekennzeichnet, daß die Faltwand (043) aus mehreren Planken (0432a; 0432c; 0432e) besteht, die über Gelenke (0432b; 0432d; 0432f) miteinander und mit dem Längsträger (48) des Niederflurwagens verbunden und in der zusammengefalteten Stellung ineinandergeschachtelt sind.

8. Einrichtung nach Anspruch 7, dadurch gekennzeichnet, daß die Auf- und Abbewegung der Faltwände (043) mittels Zugstangen (0431b) erfolgt, die innerhalb der jeweils obersten aus einem geschlossenen Profil bestehenden Planke (04332a) als eine Art Achse verlaufen, wobei die Zugstangen an ihren Enden in Gleitführungen (0431a; 0431e) der Wagen-Eckpfosten (0431) eingespannt sind.

Fig.1

Fig.2 (1:20)

Fig.3 (1:20)

Fig. 4 (1:10)

Fig. 5 (1:10)

Fig. 6 (1:20)

Fig. 6.1 (1:10)

Fig. 6.2 (1:10)

Fig. 7.1

0592b
0592a
0591b
0591cd
0591c
04
0592c

Fig. 7.2

0591b
0591cd
0591a
5

Fig. 7

0592ab
b
0591c
0591a
0591a
0592d
0592e
5
0592e
0592d

EP 0 496 019 A1

Fig. 8

16

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0238730 (F.WALDA ET AL.)<br>* Seite 6, Zeilen 15 - 30 *<br>* Seite 10, Zeile 23 - Seite 11, Zeile 24; Figuren 1-4 *<br>----- | 1 | B61D47/00 |

**RECHERCHIERTE SACHGEBIETE (Int. Cl.5)**

B61D
B60P
B62D
B60S
B61B

Der vorliegende Recherchenbericht wurde für alle Patentansprüche erstellt

| Recherchenort | Abschlußdatum der Recherche | Prüfer |
|---|---|---|
| DEN HAAG | 05 SEPTEMBER 1991 | CHLOSTA P. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument